# EUROPÄISCHE PATENTANMELDUNG

(11) **EP 1 710 352 A1**
(43) Veröffentlichungstag der Anmeldung: **11.10.2006**
(21) Anmeldenummer: 06006345.0
(22) Anmeldetag: 28.03.2006
(51) Int. Cl.: E01F 13/02, F16B 2/06

(54) **Personenführung**

(30) Priorität: 09.04.2005 DE 102005016310
(71) Anmelder: STOREbest GmbH & Co. KG, 23560 Lübeck (DE)
(72) Erfinder: Karsten, Daniel, 23619 Zarpen (DE)
(74) Vertreter: Pott, Ulrich

(57) **Zusammenfassung**

Die Erfindung bezieht sich auf eine Personenführung 1 mit zumindest einem Vertikalpfosten 2 und zumindest einem an dem Vertikalpfosten 2 über einen Verbinder 4 höhenveränderlich abstützbaren Führungselement 3. Die Personenführung zeichnet sich dadurch aus, daß der Verbinder 4 ein am Vertikalpfosten 2 festlegbares Basisteil 5 sowie ein mit diesem verbindbaren Stützhalter (6) für das Führungselement 3 umfaßt, wobei das Basisteil 5 über den Stützhalter 6 höhenveränderlich mit dem Vertikalpfosten 2 verspannbar ist.

## Beschreibung

Die Erfindung bezieht sich auf eine Personenführung mit zumindest einem Vertikalpfosten und mit zumindest einem an dem Vertikalpfosten über einen Verbinder höhenveränderlich abstützbaren Führungselement.

Personenführungen dieser Art sind allgemein bekannt. Dabei können die beispielsweise als metallische Rohre ausgebildeten, in aller Regel horizontal orientierten Führungselemente in der der gewünschten Personenführung ausgerichteter Winkellage an dem Vertikalpfosten befestigt werden. Zwecks Einstellung einer individuell zu verändernden Anbindung des Führungselementes an den Vertikalpfosten sind diese dort höhenveränderlich zu befestigen.

Aus der DE 198 28 746 A1 ist eine Personenführung bekannt, bei der das Führungselement über eine Stützeinrichtung an dem Vertikalpfosten zu befestigen ist. Dazu sieht die Stützeinrichtung, die dort den Verbinder für das Führungselement bildet, zwei scheibenförmige Ringteile vor, die jeweils rinnenartige Vertiefungen aufweisen. Im montierten Zustand, in dem die beiden Stützscheiben mit ihren rinnenförmigen Ausnehmungen einander zugewandt aufeinanderliegen, ist damit ein innerer Ringkanal gebildet, in dem ein im Querschnitt T-förmiger Halter für das Führungselement beweglich angeordnet ist. Damit kann eine Winkeleinstellung des Führungselementes vorgenommen werden.

Eine der Stützscheiben ist über Schraubelemente mit dem Vertikalpfosten zu verbinden. Die Stützscheiben ihrerseits sind ebenfalls über Schraubverbindungen aneinander zu befestigen. Aufgrund der Schraubverbindungen ist der Verbinder nur punktuell an dem Vertikalpfosten anzuklemmen, was der Belastbarkeit des Führungselements erhebliche Grenzen setzt. Zudem ist die Montage des Verbinders zeitaufwendig und erfordert ein sorgfältiges Arbeiten mit besonderen Werkzeugen. Im Bereich des Ringkanals sind darüber hinaus zwingend Querschnitte für eine Winkelveränderung des Führungselementes frei zu halten, so daß der Verbinder nach außen hin offen ist mit einer nicht unerheblichen Verschmutzungsgefahr und dem Risiko, daß aufgrund eingedrungener Fremdgegenstände die üblicherweise aus Kunststoff bestehenden Scheibenelemente Schaden nehmen.

Es ist Aufgabe der vorliegenden Erfindung, eine Personenführung der eingangs genannten Art hinsichtlich ihrer Verbindung mit dem Führungselement zu verbessern.

Zur Lösung dieser Aufgabe zeichnet sich die Personenführung der eingangs genannten Art dadurch aus, daß der Verbinder ein am Vertikalpfosten festlegbares Basisteil sowie einen mit diesem verbindbaren Stützhalter für das Führungselement umfaßt, wobei das Basisteil über den Stützhalter höhenveränderlich mit dem Vertikalpfosten verspannbar ist.

Damit ist eine Personenführung zur Verfügung gestellt, bei der das Basisteil zunächst von dem Stützhalter ohne das Erfordernis zusätzlicher Schrauben mit dem Vertikalpfosten verspannt bzw. verklemmt wird, so daß über die gesamte Verbindungsfläche des Stützhalters mit dem Basisteil eine Klemmkraft auf das Basisteil zwecks Verspannung mit dem Vertikalpfosten ausgeübt werden kann. Damit ist die Klemmfläche gegenüber vorbekannten Lösungen wesentlich vergrößert, was zu einer deutlichen höheren Belastung des Führungselementes mitsamt dem Verbinder führt.

Das Basisteil ist zweckmäßigerweise als Gewindeklemmring ausgebildet mit einem konischen Außengewinde mit einer evolventen Verzahnung, wobei der Stützhalter bevorzugtermaßen ebenfalls als Stützhalterring ausgebildet ist mit einem zu dem konischen Außengewinde des Gewindeklemmringes gegenläufigen Innengewinde, so daß der Stützhalter einfach auf den Gewindeklemmring aufgeschraubt werden kann bei gleichzeitiger Verspannung des Basisteiles mit dem Vertikalpfosten. Dadurch sind enorme Gewindeklemmkräfte mit einfachsten manuellen Mitteln aufzubringen, ohne daß besondere Werkzeuge zum Einsatz kommen müssen. Um eine Beschädigung durch Materialstauchung auszuschließen, sind zweckmäßigerweise innerhalb des Gewindeklemmringes Materialausdehnungsnuten einzubringen.

Der Stützhalter hat zweckmäßigerweise einen umlaufenden Steg mit dahinter gelegener Aufnahme zur winkelunabhängigen Aufnahme für ein Muffenstück, das in das Führungselement eingesetzt werden kann zwecks Verbindung des Führungselements mit dem Stützhalter. Dazu hat bevorzugt das Muffenstück ein nasenförmiges Einhängeende, so daß es über den umlaufenden Steg greifen und in die dahinter gelegene Ausnehmung eintauchen kann.

Weitere vorteilhafte Ausgestaltungen ergeben sich aus weiteren Unteransprüchen, der nachfolgenden Beschreibung und der Zeichnung. In der Zeichnung zeigen:
- Fig. 1: eine perspektivische Darstellung eines ersten Ausführungsbeispiels einer Personenführung nach der Erfindung in einer geradlinigen Orientierung;
- Fig. 2: ein alternatives Ausführungsbeispiel der Personenführung nach der Erfindung im Bereich einer Abtrennung;
- Fig. 3: ausschnittsweise ein Ausführungsbeispiel einer Personenfhrung nach der Erfindung mit Darstellung der Einzelteile des Ausführungsbeispiels im Bereich eines Verbinders mit angrenzendem Vertikalpfosten und Führungselement;
- Fig. 4: vergrößert das Muffenstück des Ausführungsbeispiels nach Fig. 3 in einer perspektivischen Darstellung schräg von vorn;
- Fig. 5: eine perspektivische Darstellung des Muffenstücks nach Fig. 4 in einer perspektivischen Darstellung schräg von hinten;
- Fig. 6: eine alternative Ausbildung eines Muffenstücks in einer perspektivischen, teilweise geschnittenen Ansicht schräg von hinten, und
- Fig. 7: eine Querschnittsdarstellung der montierten Teile gemäß dem Ausführungsbeispiel nach Fig. 3.

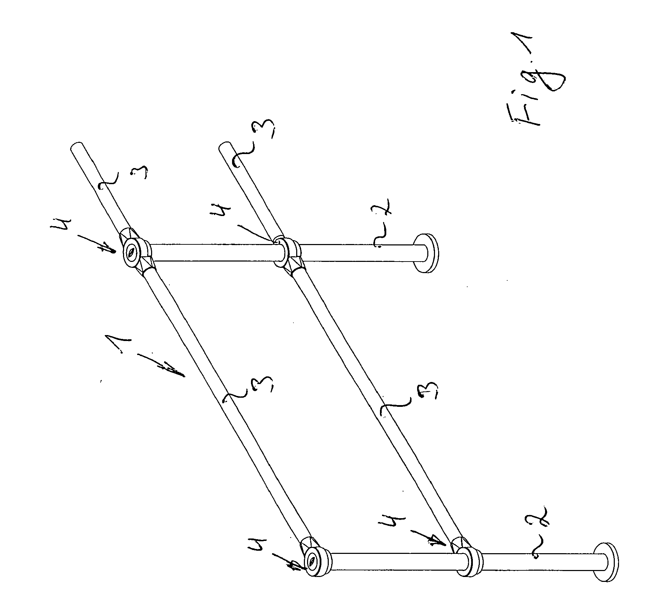

In der Zeichnung sind grundsätzlich gleichwirkende Teile mit übereinstimmenden Bezugsziffern versehen. Die in der Zeichnung allgemein mit 1 bezifferte Personenführung ist in dem in Fig. 1 gezeigten Ausführungsbeispiel als Längswegbegrenzung und mithin geradlinig orientiert ausgebildet. Diese hat Vertikalpfosten 2 sowie rohrförmige Führungselemente 3, die über einen allgemeinen mit 4 bezifferten Verbinder an dem Vertikalpfosten 2 abgestützt bzw. angebunden sind.

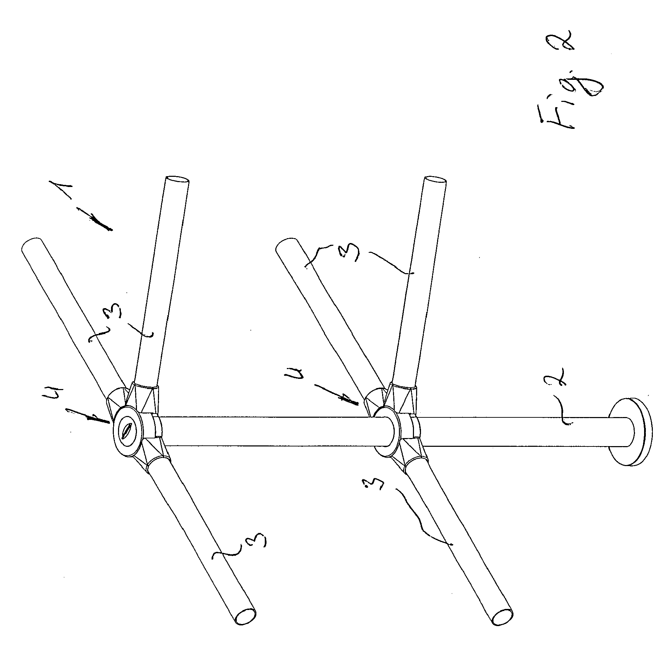

In dem Ausführungsbeispiel nach Fig. 2 ist die Personenführung im Bereich einer Abtrennung dargestellt, wo eine 90°-Abwinklung im Führungsweg vorgenommen ist. Auch hier sind wiederum ein Vertikalpfosten 2 sowie rohrförmige Führungselemente 3 sowie Verbinder 4 veranschaulicht.

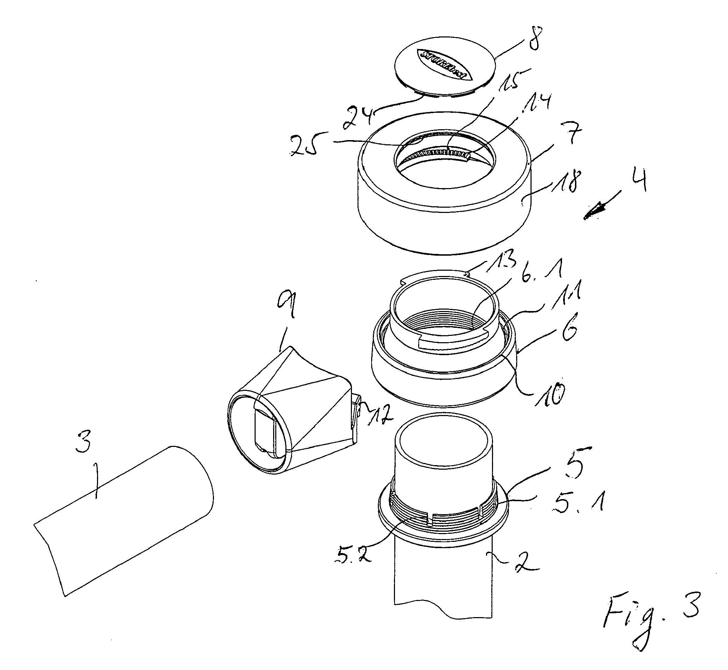

Fig. 3 zeigt ein Ausführungsbeispiel eines Verbinders 4 in Einzeldarstellung seiner Teile sowie bereichsweise ein angrenzendes rohrfömiges Führungselement 3 sowie den oberseitigen Endbereich eines Vertikalpfostens 2. Der Verbinder besteht in dem dargestellten Ausführungsbeispiel aus einem unteren, ein Basisteil bildenden Gewindeklemmring 5, einen einen Stützhalter bildenden Stützhaltering 6, den das Verschlußelement bildenden Verschlußring 7 sowie der Abdeckkappe 8 und der das Muffenstück bildenden Klemmuffe 9. In der Darstellung nach Fig. 3 ist der Gewindeklemmring 5 auf das Vertikalrohr 2 aufgeschoben. Dieser Gewindeklemmring 5 hat eine konische, von unten nach oben im Durchmesser geringer werdendes Außengewinde 5.1 mit einer evolventen Verzahnung. Um eine Beschädigung durch Materialstauchung auszuschließen, sind zudem in das Gewinde 5.1 Ausdehnungsnuten 5.2 eingearbeitet. An der Unterseite können vier um 90° versetzte Grundbohrungen (im einzelnen nicht sichtbar) zur Aufnahme eines Montageschlüssels vorgesehen sein.

Der Haltering 6 ist ebenfalls auf das Vertikalrohr aufzuschieben und dient zur Verschraubung mit dem Gewindeklemmring 5. Dazu hat der Haltering 6 ebenfalls ein konisches, jedoch von unten nach oben im Durchmesser geringer werdendes Innengewinde 6.1 mit einer evolventen Verzahnung, welches beim Aufschrauben auf das Gewinde 5.1 des Gewindeklemmringes 5 das gegenläufige Gewinde 5.1 des Gewindeklemmringes elastisch verformt. Dadurch wird die gewölbte Innenfläche, d.h. die Fläche des Gewindes 5.1, die dem Vertikalrohr 2 zugewandt ist, an den Vertikalpfosten bzw. das Vertikalrohr 2 gepreßt, so daß der Gewindeklemmring 5 mit dem Vertikalpfosten 2 verspannt wird und mithin das in beliebiger Höhe an dem Vertikalrohr 2 festzulegende und über die volle Innenfläche des Gewindes mit dem Vertikalrohr 2 zu verspannen bzw. zu verklemmen ist und damit das Basisteil des Verbinders 4 bildet.

An dem Haltering 6 ist ein umlaufender Steg 10 angeformt mit dahinter liegender rinnenartiger Ausnehmung 11, in die eine Einhängenase 12, die an dem Muffenstück 9 ausgebildet ist, eingehängt werden kann. Im oberen Bereich des Halteringes 6 befinden sich zwei mit definierter Steigung versehene Ausprägungen 13, an deren Unterseite Rasterungen in positiver Sägezahnform vorhanden sind. Diese dienen als Funktionsfläche für Ausprägungen, die im Verschlußring 7 vorgesehen sind, was noch später erläutert werden wird. Auch dazu sind negative Sägezahnrasterungen vorgesehen, wobei die Sägezahnform so ausgeführt ist, daß das Verbinden des Halteringes 2 mit dem Verschlußring 7 wenig Kraft benötigt, ein Lösen dieser Verbindung jedoch erschwert ist.

Der Verschlußring 7 ist ebenfalls auf das Vertikalrohr aufzuschieben und dient als Fixierung der Klemmuffe 9 und daraus resultierend auch zur Fixierung des Führungselementes 3. Der Verschlußring 7 weist zwei im Inneren vorhandene Ausprägungen 14 mit definierter Steigung auf, auf deren Oberseite Rasterungen 15 in negativer Sägezahnform vorgesehen sind. Wie erwähnt, dienen diese als Funktionsflächen für die im Haltering 7 befindlichen Ausprägungen mit definierter Steigung und positiver Sägezahnrasterung.

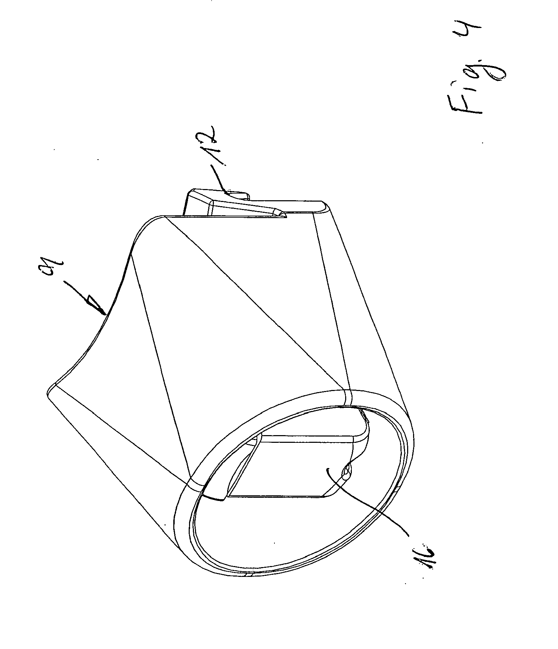

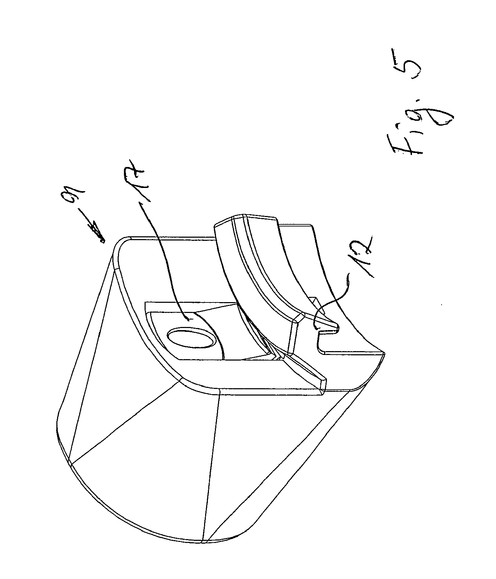

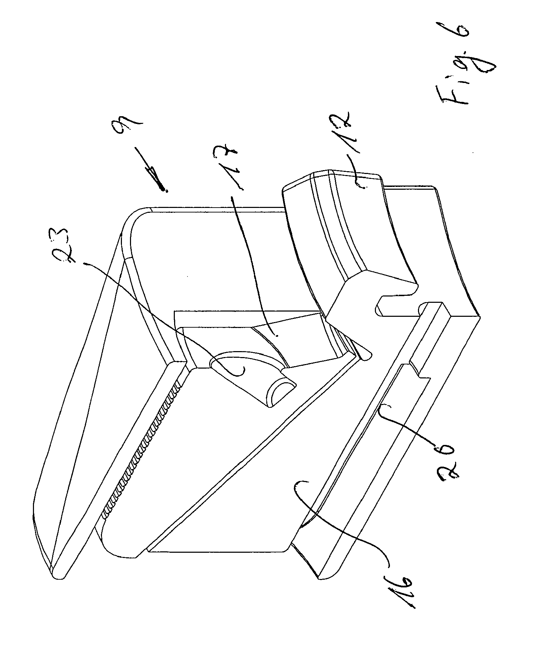

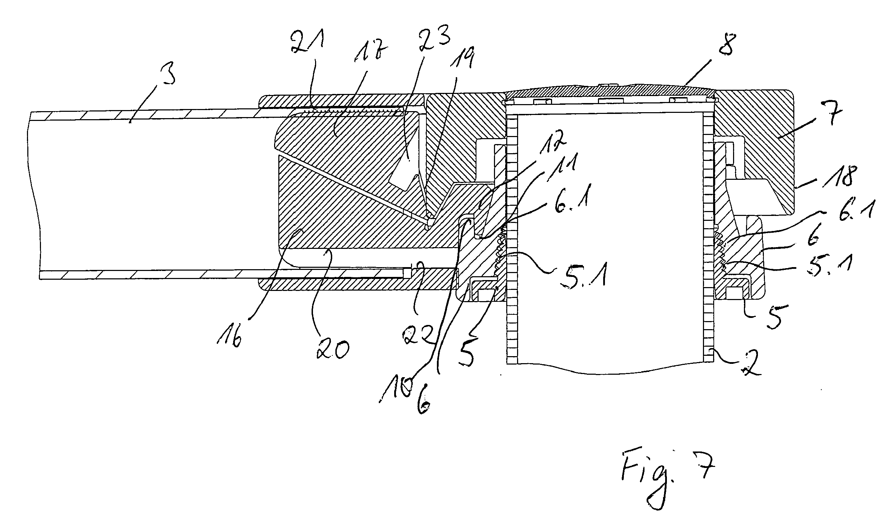

Wie auch näher aus den Fig. 4-7 hervorgeht, dient die Klemmuffe 9 zur Aufnahme des Führungselementes 3. Dazu sind in der Klemmuffe 9 ein fester Keil 16 und ein loser Keil 17 vorgesehen. Die Klemmung erfolgt, nachdem die Klemmuffe 9 über die Nase 12 über den Steg 10 des Halteringes 6 greifend in die Ausnehmung 11 eingehängt ist und danach mittels der am Verschlußring 7 vorhandenen Außenfläche 18 der lose Keil 17 beim Zusammenfügen von Haltering 6 und Verschlußring 7 über die Fläche 19 verspannt wird. Um die Kräfte beim Verkeilen des Führungselementes 3 zu erhöhen, wurden auf dem festen Keil 16 axial verlaufende Verzahnungen 20 vorgesehen, um ein Verdrehen des Führungselementes 3 zu verhindern. Auf dem losen Keil 17 sind radial verlaufende Verzahnungen 21 vorgesehen, um ein Verschieben des Führungselementes 3 in axialer Richtung zu verhindern. Um ein späteres Durchführung von elektrischen Leitungen zu ermöglichen, wurde zudem noch eine Durchlaßöffnung 22 vorgesehen. Eine in den losen Keil 17 eingebrachte Rundbohrung 23 ermöglicht ein Lösen der Verspannung zwischen Führungselement 3 und dem losen Keil 17 durch den Einsatz eines einfachen Werkzeugs.

Die Abdeckkappe 8 dient als Abschluß des Verbinders, wenn dieser am Kopfende einer Personenführung bzw. eines Vertikalpfostens 2 angebracht ist. Diese Abdeckkappe 8 hat innere Rastnasen 24, die in eine radial innere Nut 25 am Verschlußring 7 eintauchen können.

Insgesamt ist damit eine Personenführung zur Verfügung gestellt, bei der Führungselemente 3 in außerordentlich einfacher Weise und tragfähig über den dargestellten Verbinder 4 an dem Vertikalpfosten 2 anzubinden sind, wobei die Verspannung bzw. Klemmkräfte vollflächig über das Basisteil auf die Außenflächen des VertikalPfostens zu übertragen sind. Darüber hinaus ist das Führungselement 3 gesichert in der Klemmuffe 9 anzubinden, und zwar in jeder beliebigen Winkelstellung.

## Patentansprüche

1. Personenführung (1) mit zumindest einem Vertikalpfosten (2) und zumindest einem an dem Vertikalpfosten (2) über einen Verbinder (4) höhenveränderlich abstützbaren Führungselement (3), **dadurch gekennzeichnet, daß** der Verbinder (4) ein am Vertikalpfosten (2) festlegbares Basisteil (5) sowie ein mit diesem verbindbaren Stützhalter (6) für das Führungselement (3) umfaßt, wobei das Basisteil (5) über den Stützhalter (6) höhenveränderlich mit dem Vertikalpfosten (2) verspannbar ist.

2. Personenführung nach Anspruch 1, **dadurch gekennzeichnet, daß** das Basisteil (5) als Gewindeklemmring ausgebildet ist.

3. Personenführung nach Anspruch 2, **dadurch gekennzeichnet, daß** der Gewindeklemmring ein konisches Außengewinde (5.1) mit einer evolventen Verzahnung aufweist.

4. Personenführung nach einem der Ansprüche 1 bis 3, **dadurch gekennzeichnet, daß** der Stützhalter (6) als Stützhaltering ausgebildet ist.

5. Personenführung nach Anspruch 3 und 4, **dadurch gekennzeichnet, daß** der Stützhaltering ein gegenläufig zu dem konischen Außengewinde (5.1) des Gewindeklemmrings ausgebildetes Innengewinde (6.1) aufweist.

6. Personenführung nach einem der Ansprüche 2 bis 5, **dadurch gekennzeichnet, daß** der Gewindeklemmring Gewindebereiche mit dazwischen gelegenen Ausdehnungsnuten (5.2) umfaßt.

7. Personenführung nach einem der Ansprüche 1 bis 6, **dadurch gekennzeichnet, daß** der Stützhalter (6) einen umlaufenden Steg (10) zur winkelunabhängigen Abstützung des Führungselementes (3) aufweist.

8. Personenführung nach einem der Ansprüche 1 bis 7, **dadurch gekennzeichnet, daß** das Führungselement (3) über ein Muffenstück (9) mit dem Stützhalter (6) verbindbar ist.

9. Personenführung nach Anspruch 8, **dadurch gekennzeichnet, daß** das Muffenstück (9) als eine in das Führungselement (3) endseits einsetzende Klemmuffe ausgebildet ist.

10. Personenführung nach einem der Ansprüche 1 bis 9, **dadurch gekennzeichnet, daß** an dem Stützhalter (6) zumindest zwei mit definierter Steigung versehene Ausprägungen (13) vorgesehenen sind, an deren Unterseite Rasterungen in positiver Sägezahnform vorgesehen sind.

11. Personenführung nach einem der Ansprüche 1 bis 10, **dadurch gekennzeichnet, daß** auf den Stützhalter (6) ein Verschlußelement (7) aufsetzbar ist.

12. Personenführung nach Anspruch 11, **dadurch gekennzeichnet, daß** das Verschlußelement (7) als Verschlußring ausgebildet ist.

13. Personenführung nach Anspruch 11 und Anspruch 12, **dadurch gekennzeichnet, daß** am Verschlußring Ausprägungen (14) mit definierter Steigung und negativen Sägezahnrastungen vorgesehen sind, die mit den Rasterungen in positiver Sägezahnform des Halteringes zusammenwirken.

14. Personenführung nach einem der Ansprüche 1 bis 13, **dadurch gekennzeichnet, daß** das Muffenstück (9) einen festen Keil (16) und einen losen Keil (17) aufweist.

15. Personenführung nach Anspruch 14, **dadurch gekennzeichnet, daß** an dem festen Keil (16) axial verlaufende Verzahnungen (20) als Verdrehsicherung für das Führungselement (3) vorgesehen sind.

16. Personenführung nach Anspruch 14 oder 15, **dadurch gekennzeichnet, daß** an dem losen Keil (17) ein axial und/oder radial ausgerichtetes elastisches Element als Verschiebesicherung für das Führungselement (3) vorgesehen sind.

17. Personenführung nach einem der Ansprüche 1 bis 16, **dadurch gekennzeichnet, daß** das Verschlußelement (7) zur Fixierung der Halterung des Führungselementes (3) ausgebildet ist.

18. Personenführung nach Anspruch 17, **dadurch gekennzeichnet, daß** das als Verschlußring ausgebildete Verschlußelement (7) im Inneren Ausprägungen mit definierter Steigung aufweist, auf deren Oberseite Rasterungen in negativer Sägezahnform vorhanden sind.

19. Personenführung nach Anspruch 18, **dadurch gekennzeichnet, daß** im Verschlußring eine radial verlaufende Nut ausgebildet ist zur Montage einer Abdeckkappe (8) durch Einrasten von dort vorgesehenen Rastnasen.

20. Personenführung nach einem der Ansprüche 14 bis 19, **dadurch gekennzeichnet, daß** der feste Keil eine Kabeldurchführungsöffnung (22) hat.
